# EUROPEAN PATENT SPECIFICATION

(11) **EP 1 816 108 B1**
(45) Date of publication and mention of the grant of the patent: **27.10.2010**
(21) Application number: 06425038.4
(22) Date of filing: 27.01.2006
(51) Int. Cl.: C03B 5/24, G01F 23/292

(54) **Device and method for measuring the level of molten glass in a furnace structure**
Einrichtung und Verfahren zum Messen des Glasstandes in einer Glasschmelzanlage
Dispositif et procédé de mesure du niveau de verre dans une installation de fusion du verre

(43) Date of publication of application: 08.08.2007
(73) Proprietor: MCR S.r.l., 16145 Genova (IT)
(72) Inventor: Beraudo, Mario, 16136 Genova (IT)
(74) Representative: Notaro, Giancarlo

(56) References cited:
- PATENT ABSTRACTS OF JAPAN vol. 004, no. 065 (C-010), 16 May 1980 (1980-05-16) & JP 55 032705 A (ASAHI GLASS CO LTD), 7 March 1980 (1980-03-07)

## Description

The present invention relates to a device for measuring the level of molten glass in a furnace structure for melting glass.

In the prior art, known devices for measuring the level of molten glass in furnace structures for melting glass comprise a video camera for observing a portion of the surface of the molten glass inside the structure, and means for processing the output signals from the video camera, able to determine the level of the molten glass through an optical measurement of the distance between a reference, substantially fixed relative to the structure, and an image of said reference reflected by the surface of the molten glass.

A device for measuring the level of molten glass of this kind is known, for example, from the Japanese document JP 55 032 705.

The object of the present invention is to provide a device for measuring the level of molten glass which enables to obtain precise measurements using an economical device that is simple to construct.

According to the present invention said object is achieved by a device for measuring the level of molten glass of the type specified at the start of the present description having all the features according to claim 1.

The invention further relates to a method for measuring the level of molten glass in a furnace structure.

In a preferred embodiment of the invention, the aforesaid video camera is placed outside the furnace structure for melting glass in proximity to an observation window obtained on a wall of the structure.

Moreover, in said preferred embodiment, the additional reference element is a tubular metallic element which projects in overhang from the furnace structure.

Additional characteristics and advantages of the present invention shall become readily understandable from the description that follows with reference to the accompanying drawings, provided purely by way of non limiting example, in which:
- Figure 1 is a plan view of a furnace structure for melting glass,
- Figure 2 is a lateral section view of the furnace structure for melting glass,
- Figure 3 is an enlarged scale view of a portion of Figure 2,
- Figure 4 is a longitudinal section view of the reference element,
- Figures 5, 6 are cross section views of the element of Figure 4 according to the lines V-V and VI-VI,
- Figure 7 is a schematic view of the field of view of the video camera,
- Figure 8 is an enlarged scale view of the field of view of the video camera,
- Figure 9 shows in enlarged scale the portion of the field of view of the video camera used for processing,
- Figures 10a, 10b and 10c show the portion of the field of view of the video camera in three different conditions.

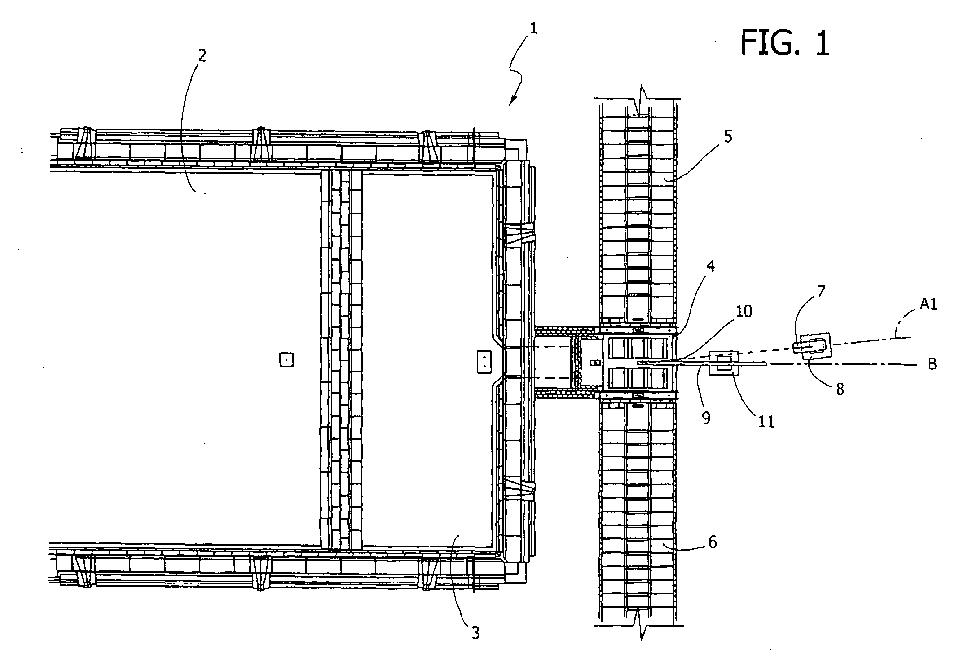

With reference to Figure 1, a furnace structure for melting glass is globally designated by the reference 1. The furnace structure 1 comprises a first zone 2 and a second zone 3 and the molten glass flows from the second zone 3 towards a chamber 4 wherefrom two distribution channels 5 and 6 branch off, which convey the molten glass to glass working machines.

In the embodiment described herein, outside the furnace structure 1 for melting glass, in proximity to the collection chamber 4, is positioned a video camera 7 for observing the surface S of the molten glass inside the chamber 4.

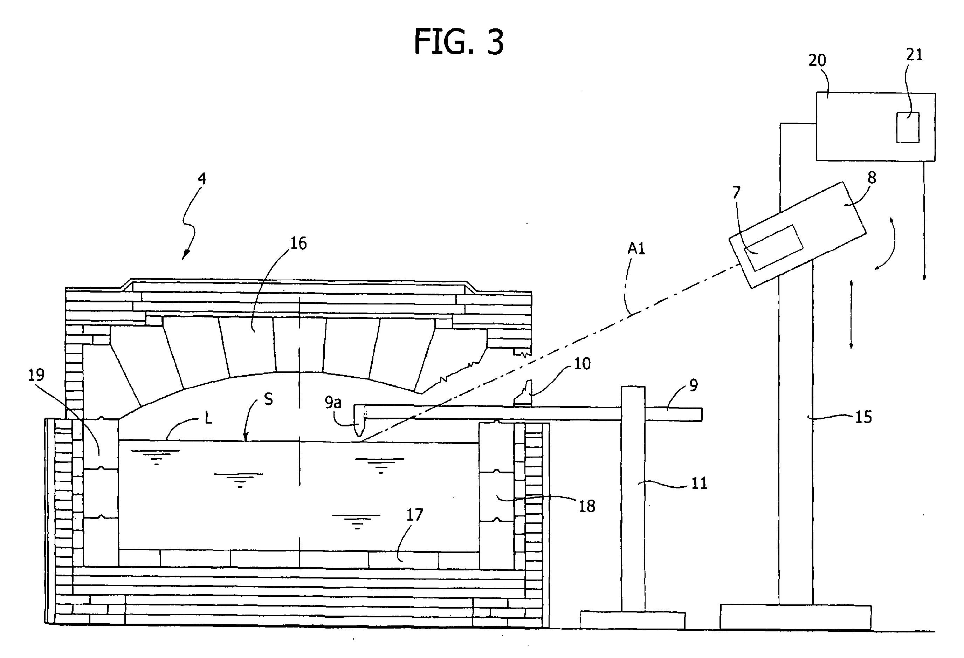

The video camera 7 is inserted inside a cooled case 8, also positioned outside the furnace structure. Moreover, the video camera 7 is positioned in proximity to an observation window 10 obtained on a lateral wall of the collection chamber 4 (see also Figure 3).

The free end of a tubular metallic element 9, used as additional reference element, is introduced into the collection chamber 4, whilst the opposite terminal portion of said element 9 is supported outside the chamber 4 by a support 11.

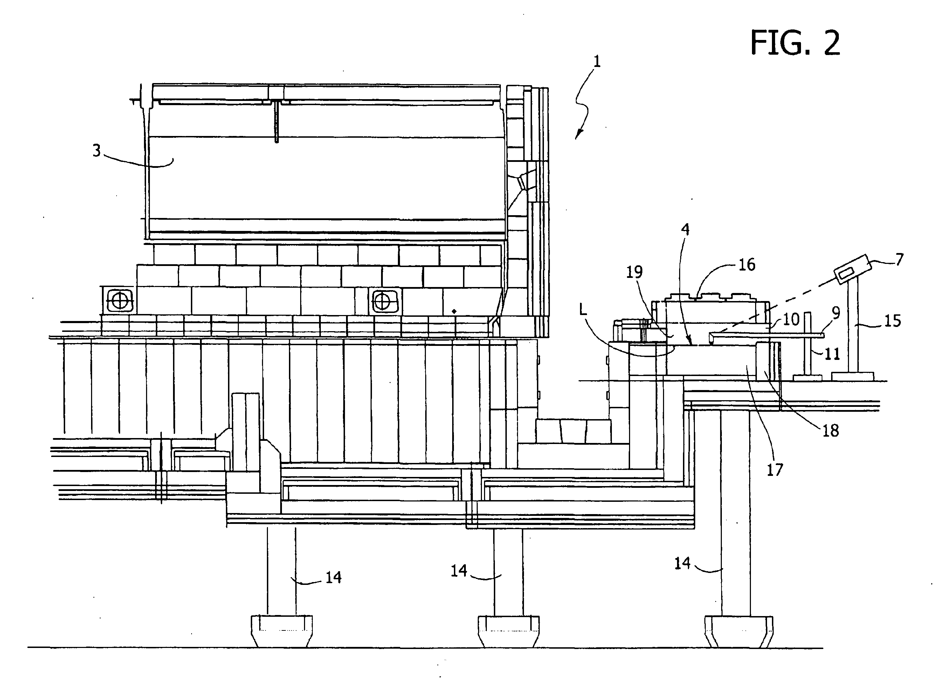

The video camera 7 is installed on a support 15, adjustable in height (shown in Figure 2). The support 15 is positioned in such a way that the axis of view A1 of the video camera 7 does not interfere with the longitudinal axis B of the reference element 9. In this way, the video camera 7 is able to shoot the interior of the collection chamber 4.

With reference to Figures 2, 3, the chamber 4 for collecting the molten glass comprises an upper wall 16, a lower wall 17 and four lateral walls. In Figure 2, the two lateral walls 18 and 19 are visible.

On the lateral wall 18 is obtained the aforesaid observation window 10.

The furnace structure 1 for melting glass is globally sustained by a plurality of columns 14 able to absorb the vibrations of the structure.

With reference to Figure 3, the reference number 9 has a terminal portion 9a bent downwards which faces the surface S of the molten glass. It is thus maintained, by the support 11, suspended above the surface S of the molten glass and at a distance therefrom.

The support 15 of the video camera 7 is so positioned that the field of view of the video camera 7 contains within it both a part of the terminal portion 9a of the reference element 9 and the portion of the surface of the molten glass whereon said terminal portion 9a is reflected. The level of the molten glass is indicated with the reference L.

The video camera 7 is connected to a processor 20 able to receive and process the signals output by the video camera 7. The level L of the molten glass is determined by means of an optical measurement of the distance between the terminal portion 9a of the reference element 9 and the image of said terminal portion reflected by the surface S of the molten glass, as shall be illustrated in detail below.

The support 15 of the video camera 7 is adjustable in such a way that, even in the presence of the vibrations normally present in furnace structures for melting glass, the video camera 7 is always able to maintain within its field of view C both the terminal portion 9a of the metallic reference element 9 and the portion of the surface S of the molten glass whereon said terminal portion 9a is reflected.

The processor 20 further comprises a memory 21 able to store a conversion factor used to transform a number of pixels, measured on an image acquired by the video camera 7, into the matching number of unit of measure of length. Said conversion factor is used in calculating the distance between the terminal portion 9a of the reference element and its image reflected on the surface S of the molten glass.

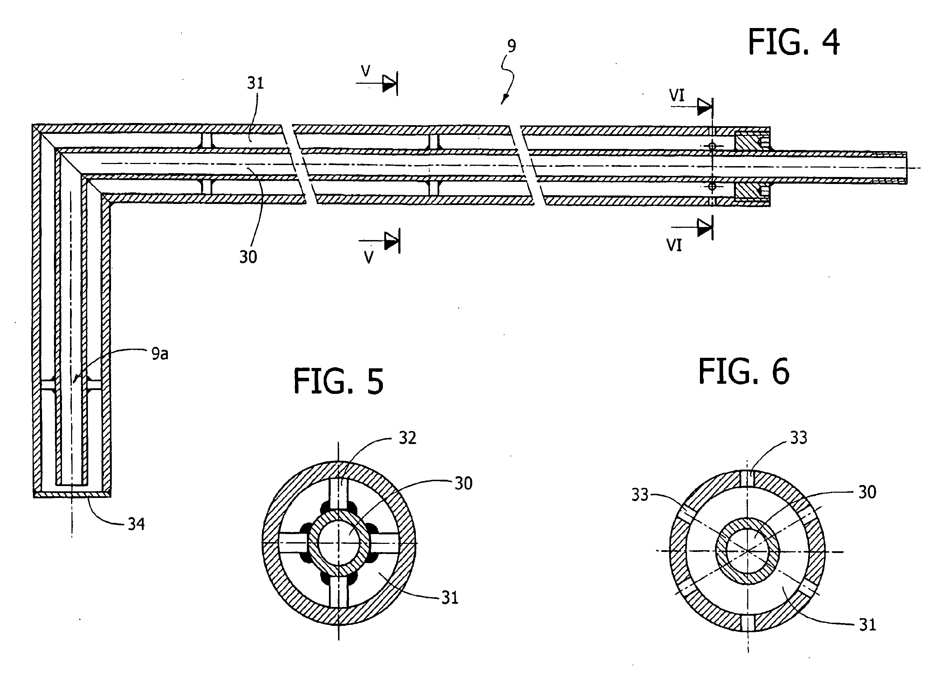

With reference to Figure 4, the tubular metallic element 9 has, in its interior, conduits adapted for the passage of a cooling fluid. In particular, the central conduit 30 is adapted to receive a cooling fluid, e.g. air or water, whilst the secondary conduit 31 is adapted for the outflow of said cooling fluid.

Figures 5 and 6 show two cross sections of the tubular element 9 obtained along the lined V-V and VI-VI.

With reference to Figure 5, the main conduit 30 is held in position inside the secondary conduit 31 by welded fins 32.

Figure 6, instead, shows venting holes 33 present on the external secondary conduit 31 for the exit of the cooling fluid. Said cooling fluid enters the main internal conduit 30, reaches a closing element 34 where it reverses its motion entering the external secondary conduit 31, finally exiting from the holes 33.

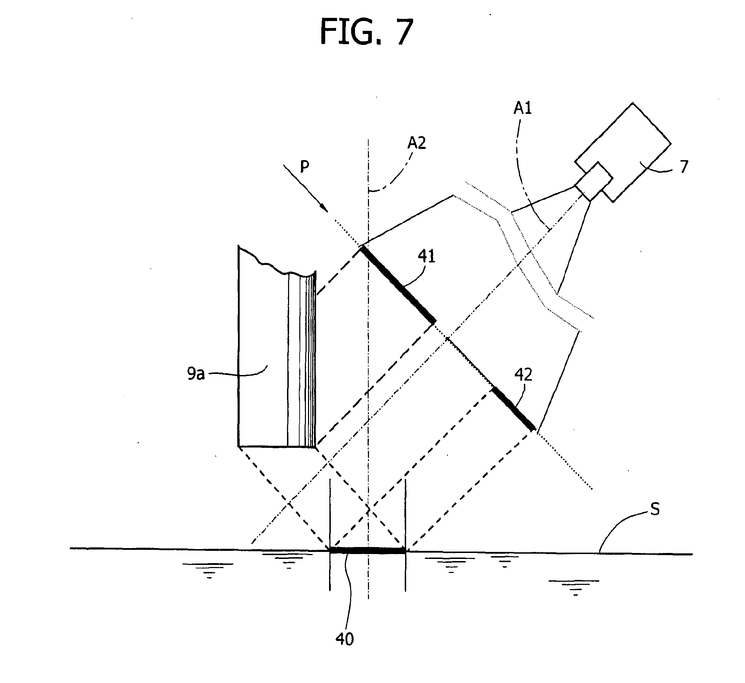

With reference to Figure 7, the terminal portion 9a of the reference element 9 generates on the surface S of the molten glass, according to the optical laws of reflection, a reflected image 40.

In a plane P perpendicular to the axis of view A1 of the video camera 7 are formed two images 41 and 42 which correspond respectively to the projection on said plane of the part, visible from the video camera, of the terminal portion 9a of the reference element 9 and to the projection on said plane P of the image 40 of the terminal portion 9a reflected on the surface S of the molten glass.

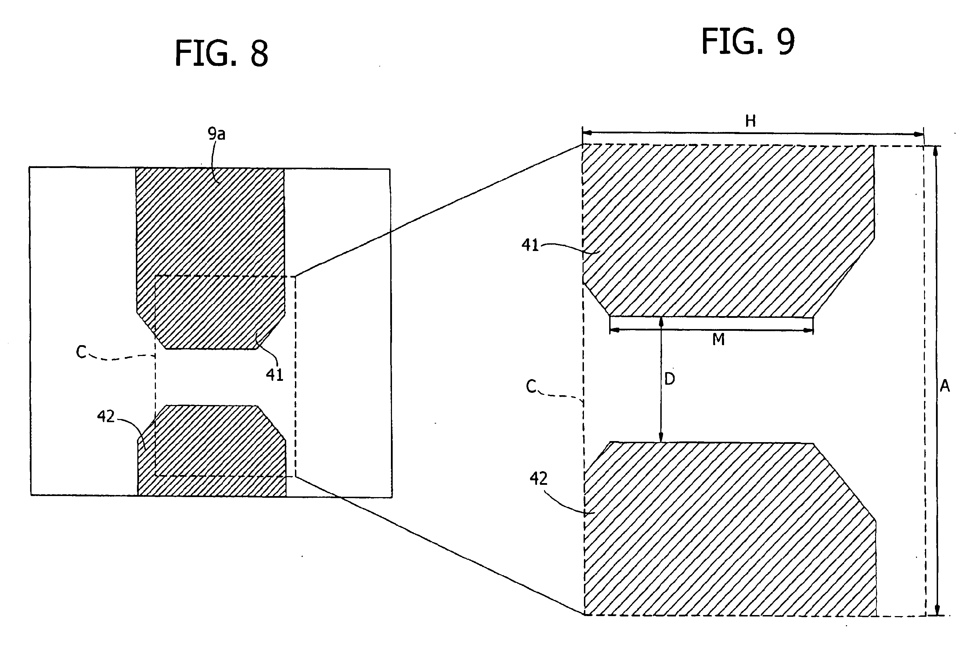

Figure 8 schematically shows, in enlarged scale, the two images 41 and 42 which are formed on the plane P orthogonal to the axis of view A1 of the video camera 7, and the field of view C of the video camera.

With reference to Figure 9, the framed portion 9a of the reference element has a real and known dimension M, defined in units of length (e.g. millimetres).

Starting from the image of Figure 9, a number of pixels is associated to the corresponding known length M of the terminal portion 9a. Lastly, a conversion factor is defined to transform any number of pixels into a corresponding distance measured in units of length.

The reference element 9 is maintained motionless in a predetermined position, whilst the reflected image varies as the level L of the molten glass varies.

The distance D between the image 41 and the image 42 is calculated starting from the number of pixels corresponding to said distance D. Multiplying the conversion factor times the number of pixels corresponding to the distance D, the distance D, expressed in units of measure of length, is obtained.

The level L of the molten glass in the collection chamber 4 is then determined starting from the variations in the distance D.

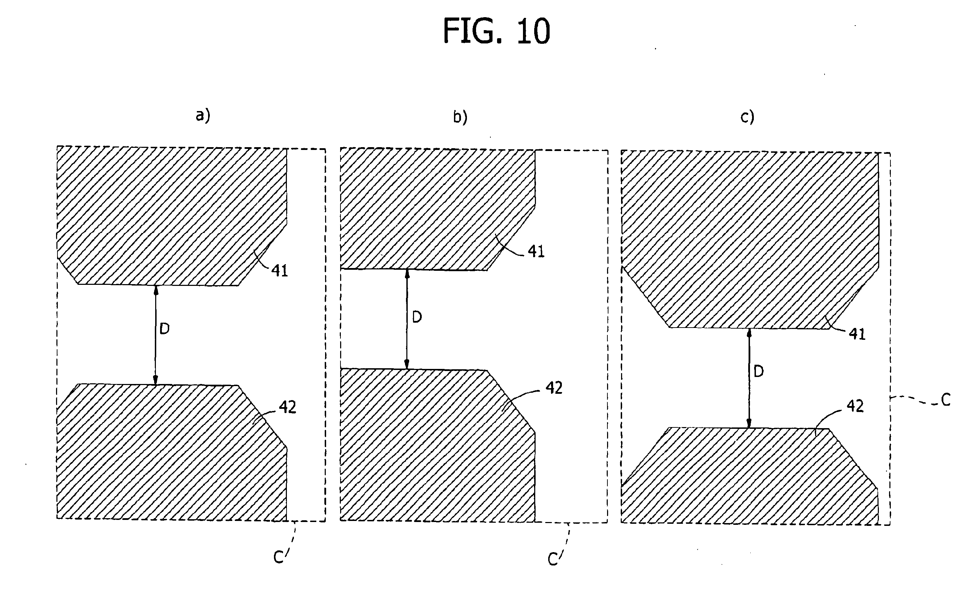

Figures 10a, 10b, 10c show three examples of possible positions of the images 41 and 42 within the field of view C of the video camera 7. In the absence of vibrations, the image is that of Figure 10a, whilst in case of vibrations, they can cause the position of the images 41 and 42 to vary between two extreme situations shown respectively in Figures 10b and 10c. As shown, the arrangement is such that even in the presence of the maximum possible vibrations both images 41 and 42 remain within the field of view C of the video camera, always assuring the capability to take the measurement.

The displacement of the images 41 and 42 within the field of view C of the video camera does not influence the measurement of the level L of the molten glass, because said measurement is derived from the measurement of the distance D between the two images 41 and 42.

In this way, it is always possible to calculate the level of the molten glass inside the collection chamber 4.

Once the conversion factor between the number of pixels and the number of units of measure of length is determined, said conversion factor is stored in the memory 21 incorporated in the computer 20 and in operation it is used for calculating the level of the molten glass in the collection chamber 4.

The precision of the measurement of the level L of the molten glass is proportional to the resolution of the image framed by the video camera.

By increasing the resolution of the video camera at will, measuring devices with high precision, up to one hundredth of a millimetre, can be obtained.

From the above description it is readily apparent that the device for measuring the level of molten glass according to the invention has advantages both from the point of view of the high measuring precision and from the point of view of the simplicity of construction and ease of use.

Naturally, without altering the principle of the invention, the construction details and the embodiments may be widely varied from what is described and illustrated purely by way of example herein, without thereby departing from the scope of the present invention, as defined by the appended claims.

## Claims

1. A device for measuring the level of molten glass in a furnace structure for melting glass, comprising a video camera (7) for observing a portion of the surface (S) of the molten glass inside the structure (1), a reference element (9), and means (20) for processing the output signals from the video camera (7), able to determine the level (L) of the molten glass through an optical measurement of the distance (D) between said reference element (9) substantially fixed relative to said structure and an image of said reference reflected by the surface of the molten glass,
**characterised in that**:
said reference element (9) is constituted by an additional element provided in the space inside the structure (1) which is configured so as to provide a terminal portion (9a) and is maintained suspended above the surface of the molten glass and at a distance therefrom, and
**in that** said video camera (7) is so arranged that its field of view (C) includes both the portion of the surface of the molten glass whereon the reference element suspended above the molten glass is reflected, and at least one portion of said reference element,
wherein said camera is held by a support (15) which is adjustable so as to maintain within said field of view C both the terminal portion (9a) of the reference element (9) and the portion of the surface (S) of the molten glass whereon said terminal portion (9a) is reflected.

2. Device as claimed in claim 1, **characterised in that** the aforesaid video camera (7) is placed outside the structure in proximity to an observation window (10) obtained on a wall of the structure.

3. Device as claimed in claim 2, **characterised in that** the aforesaid video camera (7) is placed inside a cooled case (8).

4. Device as claimed in any of the claims 1-3, **characterised in that** the aforesaid video camera (7) is arranged in such a way that, even in the presence of the vibrations normally present in furnace structures for melting glass, neither the portion of said reference element nor the portion of the surface of the molten glass whereon the reference element is reflected exit the field of view (C) of the video camera (7).

5. Device as claimed in claim 1, **characterised in that** the aforesaid processing means (20) include means (21) for storing a conversion factor to transform a number of pixels into the associated number of units of measure of length.

6. Device as claimed in claim 1, **characterised in that** said additional element (9) is a tubular metallic element which projects in overhang from the structure.

7. Device as claimed in claim 6, **characterised in that** said tubular metallic element (9) has in its interior conduits (30,31) adapted for the passage of a cooling fluid.

8. A method for measuring the level of molten glass in a furnace structure for melting glass, comprising the steps of:
- observing with a video camera (7) a portion of the surface (S) of the molten glass inside the structure, and
- processing (20) the signals output by the video camera (7) to determine the level (L) of the molten glass through an optical measurement of the distance (D) between a reference that is substantially fixed relative to said structure and an image of said reference reflected by the surface of the molten glass,
**characterised in that** it further comprises the steps of:
- using as reference an additional element (9), placing it in the space inside the structure (4) and maintained suspended above the surface of the molten glass and at a distance therefrom,
- arranging said video camera (7) in such a way that its field of view (C) includes both the portion of the surface of the molten glass whereon the reference element suspended above the molten glass is reflected, and at least one portion of said reference element, and
- adjusting the support of said camera so as to maintain within said field of view C both the reference element (9) and the portion of the surface of the molten glass whereon the reference element is reflected.

9. Method as claimed in claim 8, **characterised in that** it further comprises the step of arranging the aforesaid video camera (7) in such a way that, even in the presence of the vibrations normally present in furnace structures for melting glass, neither the portion of said reference element nor the portion of the surface of the molten glass whereon the reference element is reflected exit the field of view (C) of the video camera (7).

10. Method as claimed in claim 8, **characterised in that** it further comprises the step of storing (21) a conversion factor to transform a number of pixels into the associated number of units of measure of length.

## Patentansprüche

1. Vorrichtung zum Messen des Pegels von geschmolzenem Glas in einer Ofenstruktur zum Schmelzen von Glas, die eine Videokamera (7) zum Beobachten eines Abschnitts der Oberfläche (S) des geschmolzenen Glases im Inneren der Struktur (1), ein Bezugselement (9) und eine Einrichtung (20) zum Verarbeiten der Ausgangssignale von der Videokamera (7) umfasst, mit der der Pegel (L) des geschmolzenen Glases über eine optische Messung des Abstandes (D) zwischen dem Bezugselement (9), das relativ zu der Struktur im Wesentlichen stationär ist, und einem Bild des Bezugselementes bestimmt werden kann, das durch die Oberfläche des geschmolzenen Glases reflektiert wird,
**dadurch gekennzeichnet, dass**
das Bezugselement (9) durch ein zusätzliches Element gebildet wird, das in dem Raum im Inneren der Struktur (1) vorhanden und so ausgeführt ist, dass es einen Endabschnitt (9a) bildet, und das oberhalb der Oberfläche des geschmolzenen Glases und in einem Abstand dazu aufgehängt gehalten wird, und
dass die Videokamera (7) so angeordnet ist, dass ihr Sehfeld (C) sowohl den Abschnitt der Oberfläche des geschmolzenen Glases, an dem das oberhalb des geschmolzenen Glases aufgehängte Bezugselement reflektiert wird, als auch wenigstens einen Abschnitt des Bezugselementes einschließt,
wobei die Kamera von einem Träger (15) gehalten wird, der so eingestellt werden kann, dass er sowohl den Endabschnitt (9a) des Bezugselementes (9) als auch den Abschnitt der Oberfläche (S) in dem Sehfeld (C) halten kann, an dem der Endabschnitt (9a) reflektiert wird.

2. Vorrichtung nach Anspruch 1, **dadurch gekennzeichnet, dass** die Videokamera (7) außerhalb der Struktur nahe an einem Beobachtungsfenster (10) angeordnet ist, das an einer Wand der Struktur vorhanden ist.

3. Vorrichtung nach Anspruch 2, **dadurch gekennzeichnet, dass** die Videokamera (7) im Inneren eines gekühlten Gehäuses (8) angeordnet ist.

4. Vorrichtung nach einem der Ansprüche 1-3, **dadurch gekennzeichnet, dass** die Videokamera (7) so angeordnet ist, dass, selbst beim Vorhandensein der Vibrationen, die normalerweise in Ofenstrukturen zum Schmelzen von Glas vorhanden sind, weder der Abschnitt des Bezugselementes noch der Abschnitt der Oberfläche des geschmolzenen Glases, an dem das Bezugselement reflektiert wird, das Sehfeld (C) der Videokamera (7) verlassen.

5. Vorrichtung nach Anspruch 1, **dadurch gekennzeichnet, dass** die Verarbeitungseinrichtung (20) eine Einrichtung (21) enthält, mit der ein Umrechnungsfaktor zum Umwandeln einer Anzahl von Pixeln in die damit verbundene Anzahl von Längen-Maßeinheiten gespeichert wird.

6. Vorrichtung nach Anspruch 1, **dadurch gekennzeichnet, dass** das zusätzliche Element (9) ein röhrenförmiges Metallelement ist, das von der Struktur überhängend vorsteht.

7. Vorrichtung nach Anspruch 6, **dadurch gekennzeichnet, dass** das röhrenförmige Metallelement (9) in seinem Inneren Leitungen (30, 31) aufweist, die für das Fließen eines Kühlfluids eingerichtet sind.

8. Verfahren zum Messen des Pegels von geschmolzenem Glas in einer Ofenstruktur zum Schmelzen von Glas, das die folgenden Schritte umfasst:
Beobachten eines Abschnitts der Oberfläche (S) des geschmolzenen Glases im Inneren der Struktur mit einer Videokamera (7) und
Verarbeiten (20) der durch die Videokamera (7) ausgegebenen Signale, um den Pegel (L) des geschmolzenen Glases über eine optische Messung des Abstandes (D) zwischen einem Bezugselement, das relativ zu der Struktur im Wesentlichen stationär ist, und einem Bild des Bezugselementes zu bestimmen, das durch die Oberfläche des geschmolzenen Glases reflektiert wird,
**dadurch gekennzeichnet, dass** es des Weiteren die folgenden Schritte umfasst:
Verwenden eines zusätzlichen Elementes (9) als Bezugselement, wobei es in dem Raum im Inneren der Struktur (4) angeordnet und oberhalb der Oberfläche des geschmolzenen Glases und in einem Abstand dazu aufgehängt gehalten wird, Anordnen der Videokamera (7), so dass ihr Sehfeld (C) sowohl den Abschnitt der Oberfläche des geschmolzenen Glases, an dem das oberhalb des geschmolzenen Glases aufgehängte Bezugselement reflektiert wird, als auch wenigstens einen Abschnitt des Bezugselementes einschließt, und
Einstellen des Trägers der Kamera, so dass sowohl das Bezugselement (9) als auch der Abschnitt der Oberfläche des geschmolzenen Glases, an dem das Bezugselement reflektiert wird, innerhalb des Sehfeldes (C) gehalten werden

9. Verfahren nach Anspruch 8, **dadurch gekennzeichnet, dass** es des Weiteren den Schritt umfasst, in dem die Videokamera (7) so angeordnet wird, dass, selbst beim Vorhandensein der Vibrationen, die normalerweise in Ofenstrukturen zum Schmelzen von Glas vorhanden sind, weder der Abschnitt des Bezugselementes noch der Abschnitt der Oberfläche des geschmolzenen Glases, an dem das Bezugselement reflektiert wird, das Sehfeld (C) der Videokamera (7) verlassen.

10. Vorrichtung nach Anspruch 8, **dadurch gekennzeichnet, dass** es des Weiteren den Schritt des Speicherns (21) eines Umrechnungsfaktors zum Umwandeln einer Anzahl von Pixeln in die damit verbundene Anzahl von Längen-Maßeinheiten umfasst.

## Revendications

1. Dispositif pour mesurer le niveau de verre fondu dans une structure de four de fusion du verre, comprenant une caméra vidéo (7) pour observer une partie de la surface (S) du verre fondu à l'intérieur de la structure (1), un élément de référence (9), et des moyens (20) pour traiter les signaux de sortie de la caméra vidéo (7), aptes à déterminer le niveau (L) du verre fondu par le biais d'une mesure optique de la distance (D) entre ledit élément de référence (9) sensiblement fixe par rapport à ladite structure et une image de ladite référence réfléchie par la surface du verre fondu,
**caractérisé en ce que** :
ledit élément de référence (9) est constitué par un élément supplémentaire prévu dans l'espace à l'intérieur de la structure (1) qui est configuré de sorte à présenter une partie terminale (9a) et est maintenu en suspension au-dessus de la surface du verre fondu et à une distance de celle-ci, et
**en ce que** ladite caméra vidéo (7) est disposée de telle sorte que son champ de vision (C) comprenne à la fois la partie de la surface du verre fondu sur laquelle est réfléchi l'élément de référence suspendu au-dessus du verre fondu, et au moins une partie dudit élément de référence,
dans lequel ladite caméra est maintenue par un support (15) qui est ajustable de sorte à maintenir dans ledit champ de vision C à la fois la partie terminale (9a) de l'élément de référence (9) et la partie de la surface (S) du verre fondu sur laquelle est réfléchie ladite partie terminale (9a).

2. Dispositif selon la revendication 1, **caractérisé en ce que** ladite caméra vidéo (7) est placée à l'extérieur de la structure à proximité d'une fenêtre d'observation (10) obtenue sur une paroi de la structure.

3. Dispositif selon la revendication 2, **caractérisé en ce que** ladite caméra vidéo (7) est placée à l'intérieur d'un boîtier refroidi (8).

4. Dispositif selon l'une quelconque des revendications 1 à 3, **caractérisé en ce que** ladite caméra vidéo (7) est disposée de telle manière que, même en la présence des vibrations normalement présentes dans les structures de four de fusion du verre, ni la partie dudit élément de référence, ni la partie de la surface du verre fondu sur laquelle est réfléchi l'élément de référence ne sortent du champ de vision (C) de la caméra vidéo (7).

5. Dispositif selon la revendication 1, **caractérisé en ce que** lesdits moyens de traitement (20) comprennent des moyens (21) pour stocker un facteur de conversion pour transformer un nombre de pixels en le nombre associé d'unités de mesure de longueur.

6. Dispositif selon la revendication 1, **caractérisé en ce que** ledit élément supplémentaire (9) est un élément métallique tubulaire qui se projette en saillie à partir de la structure.

7. Dispositif selon la revendication 6, **caractérisé en ce que** ledit élément métallique tubulaire (9) présente à l'intérieur des conduits (30, 31) conçus pour le passage d'un fluide de refroidissement.

8. Procédé de mesure du niveau de verre fondu dans une structure de four de fusion du verre, comprenant les étapes consistant à :
- observer avec une caméra vidéo (7) une partie de la surface (S) du verre fondu à l'intérieur de la structure, et
- traiter (20) les signaux produits par la caméra vidéo (7) pour déterminer le niveau (L) du verre fondu par le biais d'une mesure optique de la distance (D) entre une référence qui est sensiblement fixe par rapport à ladite structure et une image de ladite référence réfléchie par la surface du verre fondu, **caractérisé en ce qu'**il comprend en outre les étapes consistant à :
- utiliser comme référence un élément supplémentaire (9), en le plaçant dans l'espace à l'intérieur de la structure (4) et maintenu en suspension au-dessus de la surface du verre fondu et à une distance de celle-ci,
- disposer ladite caméra vidéo (7) de telle manière que son champ de vision (C) comprenne à la fois la partie de la surface du verre fondu sur laquelle est réfléchi l'élément de référence en suspension au-dessus du verre fondu, et au moins une partie dudit élément de référence, et
- ajuster le support de ladite caméra de sorte à maintenir à l'intérieur dudit champ de vision C à la fois l'élément de référence (9) et la partie de la surface du verre fondu sur laquelle est réfléchi l'élément de référence.

9. Procédé selon la revendication 8, **caractérisé en ce qu'**il comprend en outre l'étape consistant à disposer ladite caméra vidéo (7) de telle manière que, même en la présence des vibrations normalement présentes dans les structures de four de fusion du verre, ni la partie dudit élément de référence, ni la partie de la surface du verre fondu sur laquelle est réfléchi l'élément de référence ne sortent du champ de vision (C) de la caméra vidéo (7).

10. Procédé selon la revendication 8, **caractérisé en ce qu'**il comprend en outre l'étape de stockage (21) d'un facteur de conversion pour transformer un nombre de pixels en le nombre associé d'unités de mesure de longueur.
